# EUROPÄISCHE PATENTSCHRIFT

(11) **EP 1 958 797 B1**
(45) Veröffentlichungstag und Bekanntmachung des Hinweises auf die Patenterteilung: **28.04.2010**
(21) Anmeldenummer: 08002612.3
(22) Anmeldetag: 13.02.2008
(51) Int. Cl.: B60G 3/06, B60G 3/26, B60G 15/06

(54) **Radaufhängung für die gelenkten Räder eines Kraftfahrzeuges**
Wheel suspension for the articulated wheels of a motor vehicle
Suspension de roue pour les roues articulées d'un véhicule automobile

(30) Priorität: 14.02.2007 DE 102007007181
(43) Veröffentlichungstag der Anmeldung: 20.08.2008
(73) Patentinhaber: AUDI AG, 85045 Ingolstadt (DE)
(72) Erfinder: Schmidt, Walter, 86643 Rennertshofen (DE); Langhoff, Hans-Jürgen, 85101 Lenting (DE)
(74) Vertreter: Asch, Konrad

(56) Entgegenhaltungen:
- EP-A- 0 193 796
- EP-A- 0 199 189
- WO-A-93/22150
- DE-A1- 1 580 480
- DE-A1- 3 606 327

## Beschreibung

Die Erfindung betrifft eine Radaufhängung für die gelenkten Räder eines Kraftfahrzeuges gemäß dem Oberbegriff des Patentanspruches 1.

Eine derartige Radaufhängung zeigt z. B. die WO 2005/023569 A1, bei der ein erster, um eine Lenkachse schwenkbarer Radträger und ein zweiter, mit radführenden Elementen wie einem unteren Querlenker und einem Federbein verbundener Radträger vorgesehen ist. Der Vorteil einer derartigen Radaufhängung liegt u.a. in der Trennung der Radträgerfunktionen Lenken einerseits und der Radführung andererseits, wobei eine von baulichen Zwängen weitgehendst unabhängige Auslegung der Lenkachse z.B. nahe der Radmitte mit geringem Maß a (Störkrafthebelarm) und günstigem Lenkrollradius verwirklichbar ist. Einem durch die Radaufstandskraft über den zweiteiligen Radträger auf die Kolbenstange des Federbeines ausgeübten Biegemoment kann ggf. zumindest teilweise durch die um die Kolbenstange herum angeordnete Tragfeder entgegengewirkt werden. Bei einer niedrigen Bauweise des Kraftfahrzeuges kann aber die Unterbringung der Tragfeder problematisch sein.

Aus der DE-A-1 580 489 ist eine Radaufhängung für gelenkte Räder bekannt, wobei ein Trägerteil des Radträgers über eine am Aufbau des Kraftfahrzeuges angelenkte Lenkeranordnung und einen etwa vertikal angeordneten, fest mit dem Trägerteil verbundenen Teleskop-Stoßdämpfer am Aufbau geführt ist. An einem Lenker der Lenkeranordnung ist eine Zusatzfeder vorgesehen, die sich am Stoßdämpfer abstützt und einen sich durch die Radaufstandskraft ergebenden Kippmoment entgegenwirkt. Aus der weiteren DE-A-36 06 327 ist eine Radaufhängung mit einem Radträger bekannt, an dem eine Zusatzfeder abgestützt ist. Die Druckschrift befasst sich ebenfalls mit dem Problem einer Kompensierung von Biegekräften bzw. Kippmomenten, wobei die Zusatzfeder als eine Gasfeder ausgebildet ist, die sich am Schwenklager eines Federbeins abstützt.

Aufgabe der Erfindung ist es, eine Radaufhängung der gattungsgemäßen Art vorzuschlagen, die bei verbesserten kinematischen Eigenschaften und Einbauverhältnissen ein gutes Ansprechverhalten des Teleskop-Stoßdämpfers sicherstellt.

Diese Aufgabe wird erfindungsgemäß mit den Merkmalen des Patentanspruches 1 gelöst. Vorteilhafte Weiterbildungen der Erfindung sind in den Unteransprüchen offenbart.

Gemäß dem kennzeichnenden Teil des Patentanspruches 1 wird vorgeschlagen, dass an einem Lenker der Lenkeranordnung eine Zusatzfeder vorgesehen ist, die sich am zweiten Trägerteil der Radaufstandskraft entgegenwirkend abstützt.

Durch die vorgeschlagenen Maßnahmen ist neben einer kinematisch vorteilhaften Radführung sichergestellt, dass weder von der Tragfeder (diese kann eine Schraubendruckfeder, eine Gasdruckfeder, eine Drehstabfeder oder eine Blattfeder sein) noch von der Radaufstandskraft über den Radträger bzw. Trägerteil Biegemomente auf den Teleskop-Stoßdämpfer ausgeübt werden.

Vorzugsweise kann das zweite Trägerteil mittels eines Querlenkers und eines Längs- oder Schräglenkers mit dem Aufbau verbunden sein. Dabei kann der Querlenker mit einem Gelenklager am Aufbau und mit zwei etwa in Längsrichtung benachbart zueinander positionierten Gelenklagern an dem zweiten Radträger angelenkt sein. Das eine Gelenklager kann vorzugsweise in der Seitenansicht betrachtet im wesentlichen in einer gedachten Verlängerung der Stoßdämpfer-Mittelachse liegen, während die Tragfeder zwischen dem aufbauseitigem Gelenkpunkt und den Gelenkpunkten am Radträger am Querlenker abgestützt sein kann. Von Vorteil ist es, wenn der wirksame Kraftangriffs-Mittelpunkt der Tragfeder im wesentlichen auf der gedachten Verbindungslinie zwischen dem aufbauseitigen Gelenkpunkt und dem in der Stoßdämpfer-Mittelachse liegendem Gelenkpunkt liegt.

Der Anlenkpunkt der Gelenkverbindung zwischen dem Längslenker und dem Querlenker kann baulich und kinematisch günstig nahe dem in der verlängerten Stoßdämpfer-Mittelachse liegenden Gelenklager des Querlenkers positioniert sein.

Bevorzugt ist dabei der Längs- oder Schräglenker ähnlich einer Zugstrebe schräg nach vorne innen ausgerichtet und kann somit insbesondere beim Überfahren von Hindernissen auftretende Längskräfte auf die Radaufhängung zuverlässig aufnehmen.

Erfindungsgemäß ist der Längslenker mit einem Lenkerabschnitt über den Anlenkpunkt am Querlenker hinaus verlängert und trägt dort die etwa vertikal ausgerichtete Zusatzfeder, die sich an einem am Radträger ausgebildeten Vorsprung abstützt. Die Zusatzfeder kann somit aufgrund ihrer Positionierung sowohl in Fahrzeugquerrichtung als auch in Fahrzeuglängsrichtung wirkende Biegemomente am Stoßdämpfer der Radaufhängung kompensieren.

Bevorzugt kann dabei der wirksame Angriffspunkt der Zusatzfeder am Vorsprung des zweiten Radträgerteiles in Fahrzeuglängsrichtung und senkrechter Projektion betrachtet in einem definierten Abstand näher zur senkrechten Fahrzeuglängsmittelebene als das hintere Gelenklager des Querlenkers liegen und deren Federrate so ausgelegt sein, dass bei einer definiert vorgegebenen Fahrsituation weitgehendst eine biegekraftfreie Belastung des Teleskop-Stoßdämpfers erreicht ist.

Des weiteren kann vorteilhaft der wirksame Angriffspunkt der Zusatzfeder am Vorsprung des zweiten Radträgerteiles in Fahrzeugquerrichtung und in senkrechter Projektion betrachtet mit einem definierten Abstand hinter dem Gelenkpunkt des hinteren Gelenklagers des Querlenkers derart positioniert sein, dass ein durch die Radaufstandskraft entstehendes Biegemoment M_{Q} am Stoßdämpfer kompensiert ist.

Baulich und kinematisch vorteilhaft kann der Stoßdämpfer ca. 5 Grad gegenüber einer Senkrechten nach vorne oben geneigt sein, wobei das in der verlängerten Stoßdämpfer-Mittelachse liegende Gelenklager hinter der senkrechten Radmittellinie liegt.

In an sich bekannter Weise kann die durch die Drehlager zwischen erstem und zweitem Radträger definierte Lenkachse nahe der Radmittelebene verlaufen, um unerwünschte Lenkreaktionen bei Brems- und/oder Beschleunigungsmomenten sowie beim Überfahren von Fahrbahnunebenheiten zu minimieren.

Die Tragfeder kann bevorzugt durch eine unmittelbar am Querlenker abgestützte Schraubendruckfeder oder Gasdruckfeder gebildet sein.

Schließlich kann baulich und funktionell günstig die Lenkeinrichtung eine Zahnstangenlenkung mit direkt abtreibenden Spurstangen sein, die in Fahrtrichtung des Kraftfahrzeuges vor oder hinter dem Querlenker positioniert ist.

Ein Ausführungsbeispiel der Erfindung ist im folgenden anhand der Zeichnung näher erläutert. Es zeigen:
- **Fig.**: **1** eine Draufsicht auf eine Radaufhängung für Kraftfahrzeuge, mit einem zweigeteilten Radträger, einem Querlenker, einem Längslenker und einem radführenden Teleskop-Stoßdämpfer, sowie mit einer am Querträger abgestützten Tragfeder;

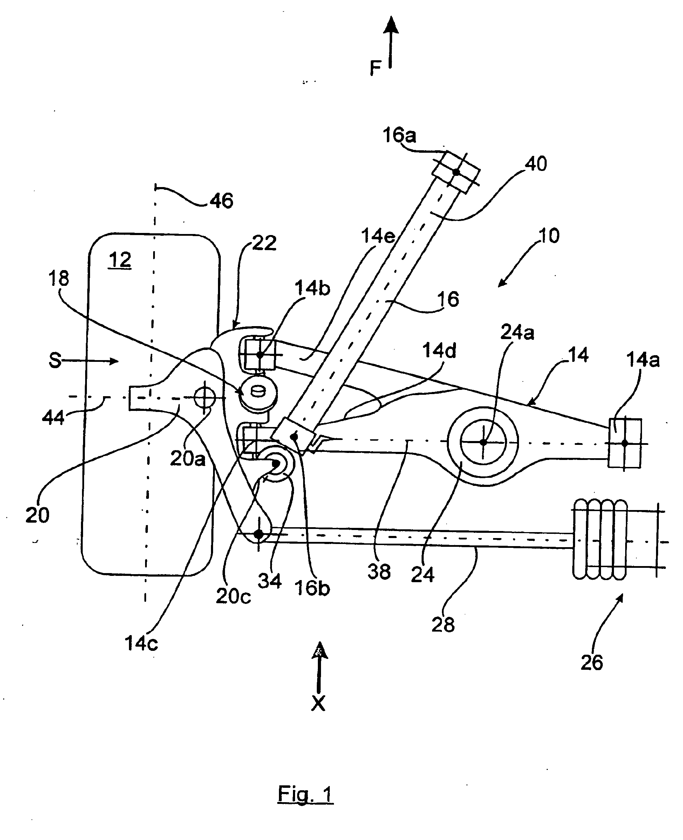

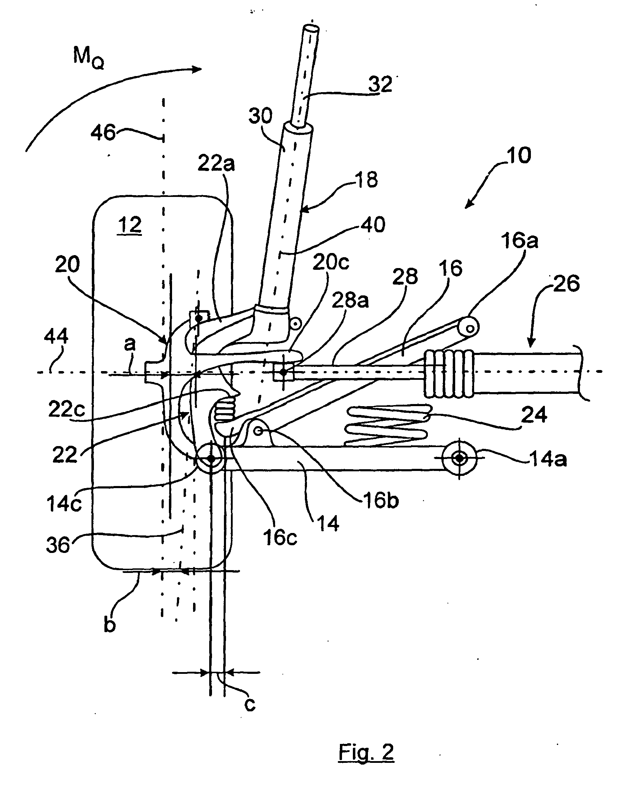

- **Fig. 2**: eine Ansicht X der Radaufhängung gemäß Fig. 1 von hinten;
- **Fig.**: **3** eine Seitenansicht S der Radaufhängung gemäß Fig. 1; und
- **Fig.**: **4** eine Übersichtsskizze der Radaufhängung nach den Fig. 1 bis 3 mit den entsprechenden Gelenkpunkten.

In den **Fig. 1 bis 4** ist eine unabhängige Radaufhängung 10 für das linke Vorderrad 12 eines Kraftfahrzeuges dargestellt. Die reguläre Fahrtrichtung des Kraftfahrzeuges ist mit F angezeigt.

Die Radaufhängung 10 setzt sich im wesentlichen zusammen aus einem Querlenker 14, einem schräg nach vorne innen verlaufenden Schräg- oder Längslenker 16, einem Teleskop-Stoßdämpfer 18 und einem zweiteiligen Radträger 20, 22. Am Querlenker 14 ist eine Schraubendruckfeder als Tragfeder 24 angeordnet, die sich andererseits in bekannter Weise am nicht dargestellten Aufbau des Kraftfahrzeuges abstützt.

Ferner ist hinter dem Querlenker 14 eine nur abschnittsweise ersichtliche Zahnstangen-Lenkeinrichtung 26 vorgesehen, deren unmittelbar abtreibende Spurstange 28 mit dem ersten Trägerteil 20 gelenkig verbunden ist.

Der von der senkrechten Fahrzeug-Längsmitte nach außen gegabelte Querträger 14 ist über ein einziges Gelenklager 14a am nicht dargestellten Aufbau (oder einem korrespondierenden Hilfsrahmen) und über zwei äußere Gelenklager 14b, 14c an dem zweiten Trägerteil 22 des Radträgers 20, 22 angelenkt.

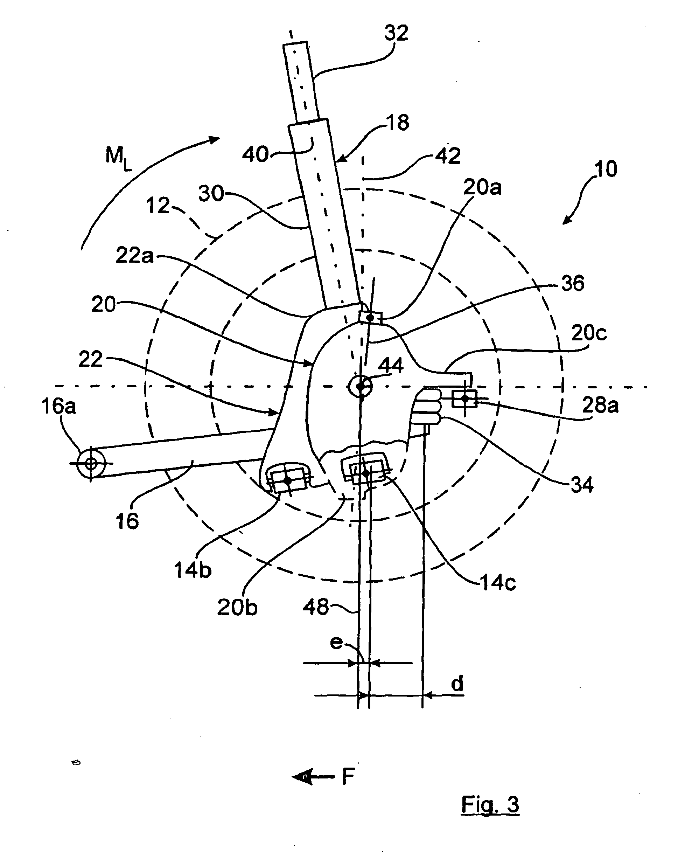

Nach oben zu ist das Trägerteil 20 (vgl. **Fig. 2** **und** **3**) über einen nach innen bogenförmig ausladenden Hals 22a fest mit dem zylindrischen Gehäuse 30 des Stoßdämpfers 18 verbunden. Dessen Kolbenstange 32 ist wiederum gelenkig mit dem Aufbau des Kraftfahrzeuges verbunden.

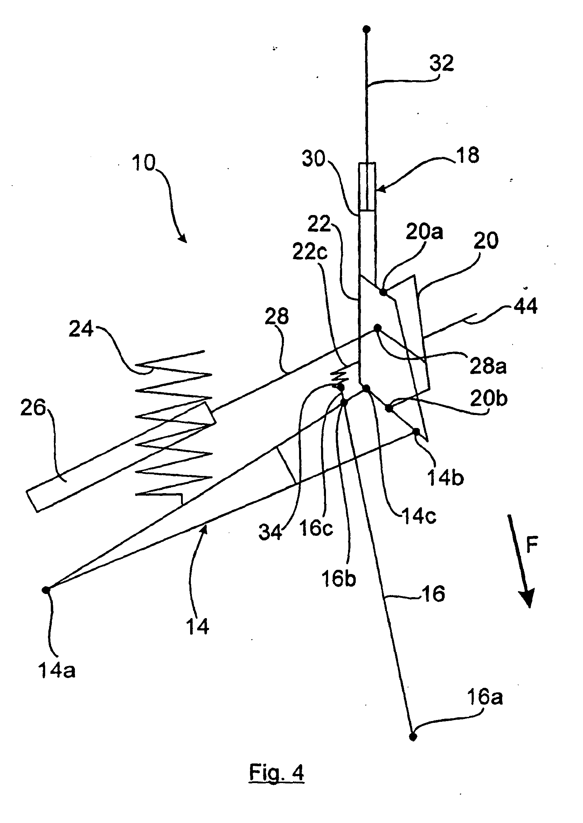

Der Längslenker 16 (**Fig. 1** **und** **4**) erstreckt sich ähnlich einer Zugstrebe ausgehend von seinem aufbauseitigen Gelenklager 16a wie ersichtlich über den Querlenker 14 und ist an dessen hinterem Arm 14d über einen Anlenkpunkt, d. h. ein Gelenklager 16b schwenkbeweglich gelagert.

Der Längslenker 16 weist ferner einen über den Anlenkpunkt 16b am Querlenker 14 hinaus verlängerten Lenkerabschnitt 16c auf, der eine etwa vertikal ausgerichtete Zusatzfeder 34 (Schraubendruckfeder) trägt, die sich an ihrer oberen Stirnseite an einem am Radträgerteil 22 ausgebildeten Vorsprung 22c (**Fig. 2**) abstützt. Durch entsprechende Anordnung der Zusatzfeder 34 und durch gezielte Auslegung deren Federrate können durch Radaufstandskräfte auf den Stoßdämpfer 18 ausgeübte Biegemomente M_{Q}, M_{C} weitgehendst eli miniert werden, zumindest bei definierten Fahrsituationen wie Geradeausfahrt des Kraftfahrzeuges und vorgegebener Beladung.

Das erste Trägerteil 20 des Radträgers 20, 22 ist im wesentlichen U-förmig gestaltet und über zwei eine Lenkachse 36 definierende Drehlager 20a, 20b (auf Lagerbolzen drehbar gelagerte Lagerbüchsen) schwenkbar gelagert. Das Trägerteil 20 trägt in bekannter Weise die Radlagerung, Scheibenbremsen und das Rad 12 und ist mittels eines angeformten Lenkhebels 20c über ein Gelenklager (Kugelgelenk) 28a mit der Spurstange 28 der Lenkeinrichtung 26 verbunden.

Die Tragfeder 24 bzw. deren zentrischer Kraftangriffspunkt 24a liegt gemäß **Fig. 1** auf einer Verbindungsgeraden 38 durch die Gelenkpunkte der Gelenklager 14a und 14c, während das an dem vorderen Arm 14e angeordnete Gelenklager 14b als nicht gewichtsbelastetes Führungslager dient.

Ferner ist wie aus **Fig. 3** ersichtlich das Gelenklager 14c derart am Trägerteil 22 angeordnet, dass es in einer auch die Raddrehachse 44 des Rades 12 durchstoßenden, verlängerten Mittellängsachse 40 des Stoßdämpfers 18 positioniert ist.
Durch die Neigung des Stoßdämpfers 18 ca. 5 Grad nach vorne oben liegt das besagte Gelenklager 14c bzw. dessen Gelenkpunkt zudem hinter einer Senkrechten 42 durch die Raddrehachse 44. Daraus resultiert ein neutrales Fahrverhalten des Kraftfahrzeuges in Kurven (Untersteuertendenz), eine Entlastung des vorderen Gelenklagers 14b und eine verzwängungsfreie Momentenübertragung von Stoßdämpfer 18 zu Querlenker 14 und umgekehrt.

Die nahe der Radmittenebene 46 (**Fig. 2**) und leicht nach oben innen geneigt verlaufende Lenkachse 36 des ersten Trägerteiles 20 stellt sicher, dass aufgrund des geringen Störkrafthebelarmes (Maß a) in Radmitte und eines geringen Lenkrollradius (Abstand b) geringe Antriebseinflüsse (bei angetriebenen Vorderrädern) und Störmomente aus Fahrbahnunebenheiten sowie bei auf das Rad 12 wirkenden Bremskräften auf die Lenkeinrichtung 26 und die radführenden Elemente 14, 16, 18 einwirken.

Die Zusatzfeder 34 stützt sich gemäß **Fig. 2** an dem Vorsprung 22c des Trägerteiles 22 in Fahrzeuglängsrichtung und in der senkrechten Projektion betrachtet innerhalb des Gelenklagers 14c (also näher zur senkrechten Fahrzeuglängsmittelebene) um einen Hebel c ab, der bewirkt, dass das von dem Rad 12 über den Radträger 20, 22 auf den Stoßdämpfer 18 ausgeübte Biegemoment M_{Q} durch ein entgegengerichtetes Moment kompensiert wird.

Des weiteren ist die Zusatzfeder 34 in Fahrzeugquerrichtung (**Fig. 3**) und in der senkrechten Projektion gesehen um den Hebel d hinter dem Gelenklager 14c angeordnet. Die Zusatzfeder 34 kompensiert damit durch ein entsprechendes Gegenmoment ein in Fahrzeuglängsrichtung wirkendes Biegemoment M_{L}, das durch den beschriebenen Versatz des Gelenklagers 14c um den Abstand e zu einer Senkrechten 48 durch die Radmittelachse 44 entsteht und auf den Stoßdämpfer 18 ebenfalls ein Biegemoment ausüben würde.

Die angeführten Gelenklager 14a, 14b, 14c, 16a, 16b, können übliche Gummi-Metall-Hülsenlager sein und sind deshalb nicht näher beschrieben.

Die Tragfeder 24 kann auch eine bekannte Gasdruckfeder sein. Ferner könnten abhängig von baulichen Gegebenheiten auch eine quer verlaufende Drehstabfeder oder eine längs- oder querverlaufende Blattfeder an der besagten Stelle an dem Querlenker 14 angelenkt sein.

Die **Fig. 4** als Übersichtsskizze zeigt die Anordnung und Verbindung der Lenker 14, 16 mit dem Radträger 20, 22 und dem Teleskop-Stoßdämpfer 18 in vereinfachter Darstellung. Die beschriebenen Gelenklager sind als Gelenkpunkte mit gleichen Bezugszeichen versehen.

## Patentansprüche

1. Radaufhängung für die gelenkten Räder (12) eines Kraftfahrzeuges, mit einem zweiteiligen Radträger (20, 22), dessen das Rad (12) drehbar aufnehmender, erster Trägerteil (20) über eine Lenkachse (36) definierende Lager (20a, 20b) schwenkbar an einem zweiten Trägerteil (22) angelenkt und mittels einer Spurstange (28) mit einer Lenkeinrichtung (26) verbunden ist, und das zweite Trägerteil (22) über eine am Aufbau des Kraftfahrzeuges angelenkte Lenkeranordnung (14; 16) und einen etwa vertikal angeordneten, fest mit dem zweiten Trägerteil (22) verbundenen Teleskop-Stoßdämpfer (18) am Aufbau geführt ist, **dadurch gekennzeichnet, dass** an einem Lenker (16) der Lenkeranordnung eine Zusatzfeder (34) vorgesehen ist, die sich am zweiten Trägerteil (22) abstützt und einem sich durch die Radaufstandskraft ergebenden Kippmoment (M_{L}, M_{Q}) entgegenwirkt, und dass der die Zusatzfeder (34) tragende Lenker (16) an einem eine Wippachse bildenden Gelenklager (16b) schwenkbar gelagert ist, so dass der Lenker (16) mit einem Lenkerabschnitt (16c) über die Wippachse hinaus verlängert ist und die Zusatzfeder (34) trägt, die sich an einem am Radträgerteil (22) ausgebildeten Vorsprung (22c) abstützt.

2. Radaufhängung nach Anspruch 1, **dadurch gekennzeichnet, dass** das zweite Trägerteil (22) mittels eines Querlenkers (14) und eines Längs- oder Schräglenkers (16) mit dem Aufbau verbunden ist.

3. Radaufhängung nach Anspruch 2, **dadurch gekennzeichnet, dass** der Querlenker (14) mit einem Gelenklager (14a) am Aufbau und mit zwei etwa in Längsrichtung benachbart zueinander positionierten Gelenklagern (14b, 14c) an dem zweiten Radträger (22) angelenkt ist.

4. Radaufhängung nach Anspruch 3, **dadurch gekennzeichnet, dass** das eine Gelenklager (14c) in der Seitenansicht betrachtet im wesentlichen in einer gedachten Verlängerung der Stoßdämpfer-Mittelachse (40) liegt.

5. Radaufhängung nach Anspruch 3 oder 4, **dadurch gekennzeichnet, dass** eine Tragfeder (24) zwischen dem aufbauseitigen Gelenkpunkt (14a) und den Gelenkpunkten (14b, 14c) am Radträger (22) am Querlenker (14) abgestützt ist.

6. Radaufhängung nach einem der Ansprüche 3 bis 5, **dadurch gekennzeichnet, dass** der wirksame Kraftangriffs-Mittelpunkt (24a) der Tragfeder (24) im wesentlichen auf einer Verbindungsgeraden (38) zwischen dem aufbauseitigen Gelenkpunkt (14a) und dem in der Stoßdämpfer-Mittelachse (40) liegendem Gelenkpunkt (14c) liegt.

7. Radaufhängung nach einem der Ansprüche 2 bis 6, **dadurch gekennzeichnet, dass** die die Wippachse bildende Gelenkverbindung (16b) zwischen dem Längslenker (16) und dem Querlenker (14) nahe dem in der verlängerten Stoßdämpfer-Mittelachse (40) liegenden Gelenklager (14c) des Querlenkers (14) positioniert ist.

8. Radaufhängung nach einem der vorhergehenden Ansprüche 2 bis 7, **dadurch gekennzeichnet, dass** der Längs- oder Schräglenker (16) ähnlich einer Zugstrebe nach vorne schräg innen ausgerichtet ist.

9. Radaufhängung nach einem der Ansprüche 1 bis 8, **dadurch gekennzeichnet, dass** der wirksame Angriffspunkt der Zusatzfeder (34) am Vorsprung (22c) des zweiten Radträgerteiles (22) in Fahrzeuglängsrichtung und senkrechter Projektion betrachtet in einem definierten Abstand (c) näher zur senkrechten Fahrzeuglängsmittelebene als das hintere Gelenklager (14c) des Querlenkers (14) liegt und deren Federrate so ausgelegt ist, dass bei einer definiert vorgegebenen Fahrsituation weitgehendst eine biegekraftfreie Belastung des Teleskop-Stopdämpfers (18) erreicht ist.

10. Radaufhängung nach einem der Ansprüche 1 bis 9, **dadurch gekennzeichnet, dass** der wirksame Angriffspunkt der Zusatzfeder (34) am Vorsprung (22c) des zweiten Radträgerteiles (22) in Fahrzeugquerrichtung und in senkrechter Projektion betrachtet mit einem definierten Abstand (d) hinter dem Gelenkpunkt des hinteren Gelenklagers (14c) des Querlenkers (14) derart positioniert ist, dass ein durch die Radaufstandskraft entstehendes Biegemoment (M_{Q}) am Stoßdämpfer (18) kompensiert ist.

11. Radaufhängung nach einem der vorhergehenden Ansprüche, **dadurch gekennzeichnet, dass** das der Stoßdämpfer (18) ca. 5 Grad gegenüber einer Senkrechten (42) nach vorne oben geneigt ist und dass das in der verlängerten Stoßdämpfer-Mittelachse (40) liegende Gelenklager (14c) hinter der senkrechten Radmittellinie (44) liegt.

12. Radaufhängung nach einem der vorhergehenden Ansprüche, **dadurch gekennzeichnet, dass** die durch die Drehlager (20a, 20b) zwischen erstem und zweitem Radträger (20, 22) definierte Lenkachse (36) nahe der Radmittelebene (46) verläuft.

13. Radaufhängung nach einem der vorhergehenden Ansprüche, **dadurch gekennzeichnet, dass** die Tragfeder (24) durch eine unmittelbar am Querlenker (14) abgestützte Schraubendruckfeder oder Gasdruckfeder gebildet ist.

14. Radaufhängung nach einem der vorhergehenden Ansprüche, **dadurch gekennzeichnet, dass** die Lenkeinrichtung eine Zahnstangenlenkung (26) mit direkt abtreibenden Spurstangen (28) ist, die in Fahrtrichtung des Kraftfahrzeuges vor oder hinter dem Querlenker (14) positioniert ist.

## Claims

1. Wheel suspension system for the steered wheels (12) of a motor vehicle, having a two-part wheel carrier (20, 22), the first carrier part (20) of which, which receives the wheel (12) such that it can rotate, is articulated pivotably on a second carrier part (22) and is connected by means of a steering rod (28) to a steering device (26), and the second carrier part (22) of which is guided on the vehicle body via a link arrangement (14; 16) which is articulated on the body of the motor vehicle and via a telescopic shock absorber (18) which is arranged approximately vertically and is connected fixedly to the second carrier part (22), **characterized in that** an additional spring (34) which is supported on the second carrier part (22) and counteracts a tilting moment (M_{L}, M_{Q}) which results from the wheel contact force is provided on a link (16) of the link arrangement, and **in that** the link (16) which carries the additional spring (34) is mounted pivotably on a pivot bearing (16b) which forms a rocker axis, with the result that the link (16) is extended beyond the rocker axis by way of a link section (16c) and carries the additional spring (34) which is supported on a projection (22c) which is formed on the wheel carrier part (22).

2. Wheel suspension system according to Claim 1,
**characterized in that** the second carrier part (22) is connected to the vehicle body by means of a transverse link (14) and a longitudinal or semi-trailing link (16).

3. Wheel suspension system according to Claim 2, **characterized in that** the transverse link (14) is articulated on the second wheel carrier (22) by way of a pivot bearing (14a) on the vehicle body and by way of two pivot bearings (14b, 14c) which are positioned adjacently to one another approximately in the longitudinal direction.

4. Wheel suspension system according to Claim 3, **characterized in that**, as viewed in the side view, one pivot bearing (14c) lies substantially in an imaginary extension of the shock-absorber centre axis (40).

5. Wheel suspension system according to Claim 3 or 4, **characterized in that** a bearing spring (24) is supported between the body-side articulation point (14a) and the articulation points (14b, 14c) on the wheel carrier (22) on the transverse link (14).

6. Wheel suspension system according to one of Claims 3 to 5, **characterized in that** the effective force-action centre point (24a) of the bearing spring (24) lies substantially on a connecting straight line (38) between the body-side articulation point (14a) and the articulation point (14c) which lies in the shock-absorber centre axis (40).

7. Wheel suspension system according to one of Claims 2 to 6, **characterized in that** the articulation (16b) which forms the rocker axis is positioned between the longitudinal link (16) and the transverse link (14) close to the pivot bearing (14c) of the transverse link (14), which pivot bearing (14c) lies in the extended shock-absorber centre axis (40).

8. Wheel suspension system according to one of the preceding Claims 2 to 7, **characterized in that** the longitudinal or semi-trailing link (16) is oriented forwards obliquely to the inside, in a similar manner to a tie bar.

9. Wheel suspension system according to one of Claims 1 to 8, **characterized in that**, as viewed in the longitudinal direction of the vehicle and in a perpendicular projection, the effective point of action of the additional spring (34) on the projection (22c) of the second wheel carrier part (22) lies at a defined spacing (c) closer to the perpendicular vehicle longitudinal centre plane than the rear pivot bearing (14c) of the transverse link (14) and its spring rate is designed such that, as far as possible, loading of the telescopic shock absorber (18) which is free of bending force is achieved in a driving situation which is stipulated in a defined manner.

10. Wheel suspension system according to one of Claims 1 to 9, **characterized in that**, as viewed in the transverse direction of the vehicle and in a perpendicular projection, the effective point of action of the additional spring (34) on the projection (22c) of the second wheel carrier part (22) is positioned at a defined spacing (d) behind the articulation point of the rear pivot bearing (14c) of the transverse link (14) in such a way that a bending moment (M_{Q}) on the shock absorber (18) which is produced by the wheel contact force is compensated for.

11. Wheel suspension system according to one of the preceding claims, **characterized in that** the shock absorber (18) is inclined at the top to the front by approximately 5 degrees with respect to a perpendicular (42), and **in that** the pivot bearing (14c) which lies in the extended shock-absorber centre axis (40) lies behind the perpendicular wheel centre line (44).

12. Wheel suspension system according to one of the preceding claims, **characterized in that** the steering axis (36) which is defined by the swivel bearings (20a, 20b) between the first and second wheel carriers (20, 22) lies close to the wheel centre plane (46).

13. Wheel suspension system according to one of the preceding claims, **characterized in that** the bearing spring (24) is formed by a gas-pressure spring or compression coil spring which is supported directly on the transverse link (14).

14. Wheel suspension system according to one of the preceding claims, **characterized in that** the steering device is a rack-and-pinion steering system (26) with direct output steering rods (28), which rack-and-pinion steering system (26) is positioned in front of or behind the transverse link (14) in the driving direction of the motor vehicle.

## Revendications

1. Suspension de roue pour les roues directrices (12) d'un véhicule automobile, comprenant un support de roue en deux parties (20, 22), dont la première partie de support (20) recevant la roue (12) de manière rotative est articulée de manière pivotante à une deuxième partie de support (22) par le biais de paliers (20a, 20b) qui définissent un axe directeur (36), et est connectée au moyen d'une barre d'accouplement (28) à un dispositif de direction (26), et dont la deuxième partie de support (22) est guidée sur la carrosserie par le biais d'un agencement de bras oscillants (14, 16) articulé à la carrosserie du véhicule automobile et d'un amortisseur télescopique (18) connecté fixement à la deuxième partie de support (22) et disposé approximativement verticalement, **caractérisée en ce qu'**un ressort supplémentaire (34) est prévu sur un bras oscillant (16) de l'agencement de bras oscillants, lequel s'appuie sur la deuxième partie de support (22) et agit à l'encontre d'un couple de basculement (M_{L}, M_{Q}) résultant de la force d'appui de la roue, et **en ce que** le bras oscillant (16) portant le ressort supplémentaire (34) est monté de manière pivotante sur un palier articulé (16b) formant un axe de basculement, de sorte que le bras oscillant (16) soit prolongé au-delà de l'axe de basculement avec une portion de bras oscillant (16c) et porte le ressort supplémentaire (34) qui s'appuie sur une saillie (22c) réalisée sur la partie de support de roue (22).

2. Suspension de roue selon la revendication 1,
**caractérisée en ce que** la deuxième partie de support (22) est connectée à la carrosserie au moyen d'un bras oscillant transversal (14) et d'un bras oscillant longitudinal ou oblique (16).

3. Suspension de roue selon la revendication 2,
**caractérisée en ce que** le bras oscillant transversal (14) est articulé avec un palier articulé (14a) à la carrosserie, et avec deux paliers articulés (14b, 14c) positionnés l'un à côté de l'autre approximativement dans la direction longitudinale, au deuxième support de roue (22).

4. Suspension de roue selon la revendication 3,
**caractérisée en ce que** l'un des paliers articulés (14c), en vue de côté, se situe essentiellement dans un prolongement imaginaire de l'axe médian (40) de l'amortisseur.

5. Suspension de roue selon la revendication 3 ou 4, **caractérisée en ce qu'**un ressort de support (24) est supporté entre le point d'articulation (14a) du côté de la carrosserie et les points d'articulation (14b, 14c) sur le support de roue (22) sur le bras oscillant transversal (14).

6. Suspension de roue selon l'une quelconque des revendications 3 à 5, **caractérisée en ce que** le centre d'application de force actif (24a) du ressort de support (24) se situe essentiellement sur une droite de connexion (38) entre le point d'articulation (14a) du côté de la carrosserie et le point d'articulation (14c) situé dans l'axe médian (40) de l'amortisseur.

7. Suspension de roue selon l'une quelconque des revendications 2 à 6, **caractérisée en ce que** la connexion articulée (16b) formant l'axe de basculement est positionnée entre le bras oscillant longitudinal (16) et le bras oscillant transversal (14) à proximité du palier articulé (14c) du bras oscillant transversal (14) situé dans l'axe médian prolongé (40) de l'amortisseur.

8. Suspension de roue selon l'une quelconque des revendications précédentes 2 à 7,
**caractérisée en ce que** le bras oscillant longitudinal ou oblique (16) est orienté de manière similaire à un tirant obliquement vers l'intérieur et vers l'avant.

9. Suspension de roue selon l'une quelconque des revendications 1 à 8, **caractérisée en ce que** le point d'application actif du ressort supplémentaire (34) sur la saillie (22c) de la deuxième partie de support de roue (22), vu dans la direction longitudinale du véhicule et en projection verticale, se situe à une distance définie (c) plus proche du plan médian vertical longitudinal du véhicule que le palier articulé arrière (14c) du bras oscillant transversal (14), et sa caractéristique de ressort est conçue de telle sorte que pour une situation de conduite prédéfinie établie, on obtienne une contrainte de l'amortisseur télescopique (18) essentiellement sans force de flexion.

10. Suspension de roue selon l'une quelconque des revendications 1 à 9, **caractérisée en ce que** le point d'application actif du ressort supplémentaire (34) sur la saillie (22c) de la deuxième partie de support de roue (22), vu dans la direction transversale du véhicule et en projection verticale, est positionné à une distance définie (d) derrière le point d'articulation du palier articulé arrière (14c) du bras oscillant transversal (14) de telle sorte qu'un couple de flexion (M_{Q}) sur l'amortisseur (18) produit par la force d'appui de la roue soit compensé.

11. Suspension de roue selon l'une quelconque des revendications précédentes, **caractérisée en ce que** l'amortisseur (18) est incliné vers le haut et vers l'avant d'environ 5 degrés par rapport à une verticale (42), et **en ce que** le palier articulé (14c) se trouvant dans l'axe médian prolongé (40) de l'amortisseur est situé derrière l'axe médian perpendiculaire de la roue (44).

12. Suspension de roue selon l'une quelconque des revendications précédentes, **caractérisée en ce que** l'axe directeur (36) défini par les paliers pivotants (20a, 20b) entre le premier et le deuxième support de roue (20, 22) s'étend à proximité du plan médian de la roue (46).

13. Suspension de roue selon l'une quelconque des revendications précédentes, **caractérisée en ce que** le ressort de support (24) est formé par un ressort de pression hélicoïdal ou un ressort de pression à gaz supporté directement sur le bras oscillant transversal (14).

14. Suspension de roue selon l'une quelconque des revendications précédentes, **caractérisée en ce que** le dispositif directeur est une direction à crémaillère (26) avec des barres d'accouplement (28) à prise directe, qui est positionnée dans la direction de conduite du véhicule automobile avant ou après le bras oscillant transversal (14).
